Europäisches Patentamt

European Patent Office

Office européen des brevets

(11) Publication number: **0 204 913**
**A1**

## EUROPEAN PATENT APPLICATION

(21) Application number: **86104631.6**

(22) Date of filing: **04.04.86**

(51) Int. Cl.⁴: **B 60 G 15/00**
**F 16 F 1/38, F 16 F 9/54**

(30) Priority: **27.05.85 IT 2091385**

(43) Date of publication of application:
**17.12.86 Bulletin 86/51**

(84) Designated Contracting States:
**DE FR GB**

(71) Applicant: **S.A.G.A. - SOCIETA' APPLICAZIONI GOMMA ANTIVIBRANTI S.p.A.**
**Via Ripamonti, 88**
**I-20141 Milan(IT)**

(72) Inventor: **Ugazio, Pierangelo**
**Viale Romolo, 6**
**Milan(IT)**

(74) Representative: **Mariani, Giorgio, Dr. et al,**
**INDUSTRIE PIRELLI S.p.A. Direzione Brevetti Piazzale Cadorna, 5**
**I-20123 Milano(IT)**

(54) Shock-absorber in a car suspension.

(57) A shock-absorber (1), in a suspension for cars, comprising - in-between the hub (4) and the chassis (6) of the vehicle, a cylinder-piston unit (2) with its relative rod (3), and a spring (16) coaxial to the cylinder-piston unit.

The shock-absorber comprises means (7) for balancing the thrusts that would tend to bend the rod (3); preferably, the said means comprise elastomeric-blocks – which are apt for exercising asymmetrical reactions with respect to the axis of the cylinder, for compensating the forces which tend to bend the rod.

Fig. 3

Fig. 1

EP 0 204 913 A1

Croydon Printing Company Ltd.

SHOCK-ABSORBER IN A CAR SUSPENSION

Description

The present invention is directed to a shock-absorber in a suspension for vehicles - and in particular, to a suspension in motor-cars.

As is known, a shock-absorber for a car-suspension, commonly called the McPherson type, generally comprises a cylinder-piston unit - with its relative rod, and a spring coaxial to the cited group.

In these applications, there are verified some drawbacks, arising from the existence of forces - transversal to the shock-absorber, that tend to bend the rod.

In fact, the ground reaction transmitted to the wheel - multiplied by the lever-arm (existing between the wheel) and the lower connection (to the wheel-hub) of the shock-absorber, originates a torque - whose direction is such, as to cause the cited bending of the rod.

In its turn, the bending of the rod can give rise to crawlings in the shock-absorber, a wearing-out of the gaskets inside the cylinder - and, in general, prove to be negative for having a correcting functioning of the shock-absorber.

According to a known solution, it was endeavoured to overcome the cited drawback - by having recourse to an opportune inclination of the metallic helicoidal spring disposed around the shock-absorber.

As a matter of fact, it was found - through the choice of an opportune angle of inclination for said spring, that it was possible to oppose said originating of bending in the rod.

However, said solution can result as being unsatisfactory – because the pre-selected angle of inclination is not always such as to compensate the thrusts transversal to the shock-absorber.

What is more, there are some applications that require a certain amount of space - for allowing said inclination of the helicoidal spring, and not always is the space available sufficient enough for this purpose.

Moreover, there also exist some particular applications – which require the use of a phneumatic spring - commonly known as an air-spring, and these pnuematic springs cannot be inclined, with respect to the axis of the rod – so as to obtain the cited balancing of the thrusts transversal to the rod.

Hence, what constitutes the object of the present invention is a shock- absorber in a suspension for vehicles, that comprises - in-between the hub and the chassis of the vehicle, - a cylinder-piston unit - with its relative rod, and a spring coaxial to said unit, the said shock-absorber being characterized by the fact of comprising means - for balancing the thrusts acting in the direction transversal to the rod.

The present invention will be better comprehended from the following detailed description - made solely by way of non-limiting example, with referring to the figures of the attached drawing TABLES, wherein:

FIG. 1 – shows a design of a shock-absorber, according to the invention.

FIG. 2 – shows an elargement of a detail in FIG. 1.

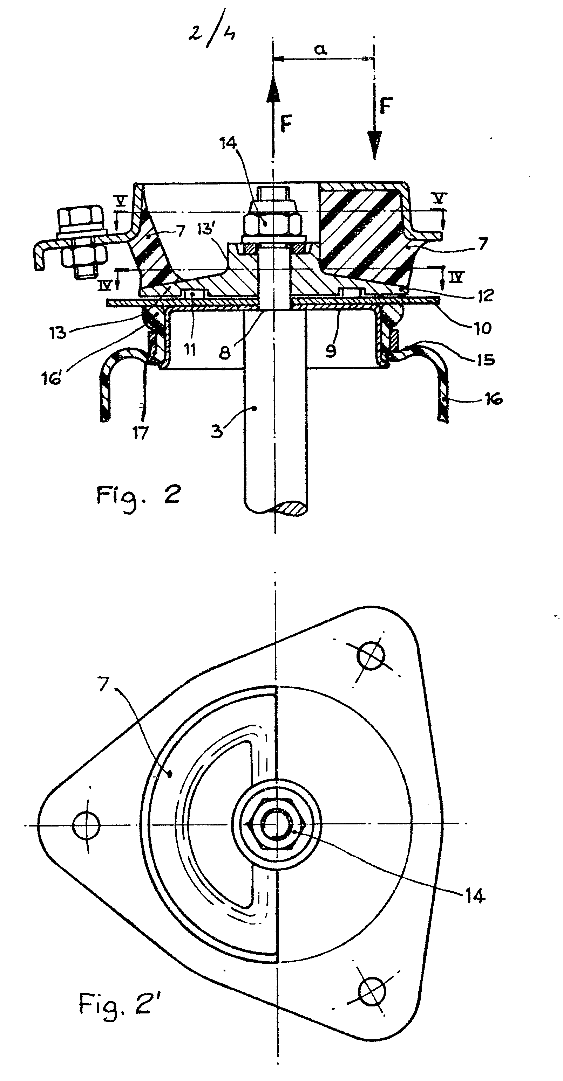

FIG. 2'– shows a top-view of FIG.2.

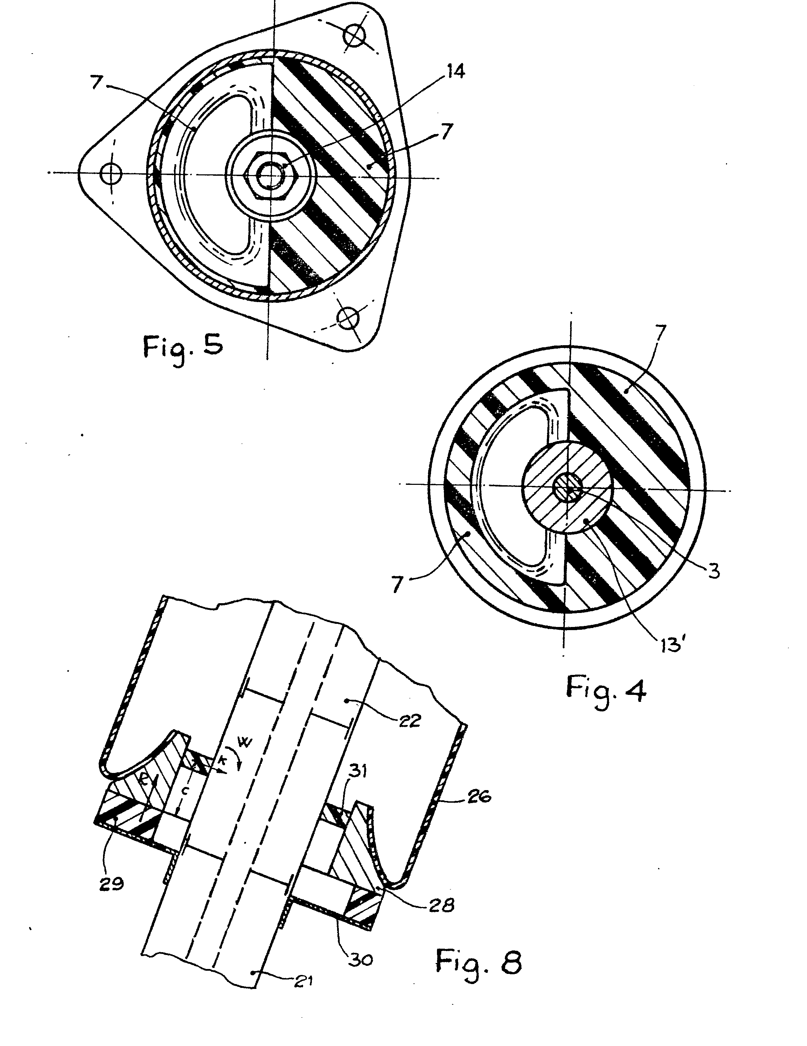

FIG. 3 - shows, in a transversal section - orthogonal to the axis of the shock-absorber, an asymmetrical elastomeric block apt for compensating the transversal thrusts on the shock-absorber.

FIGS. 4 and 5 - are transversal sections at diverse heights of FIG. 2, taken along the lines IV-IV and V-V.

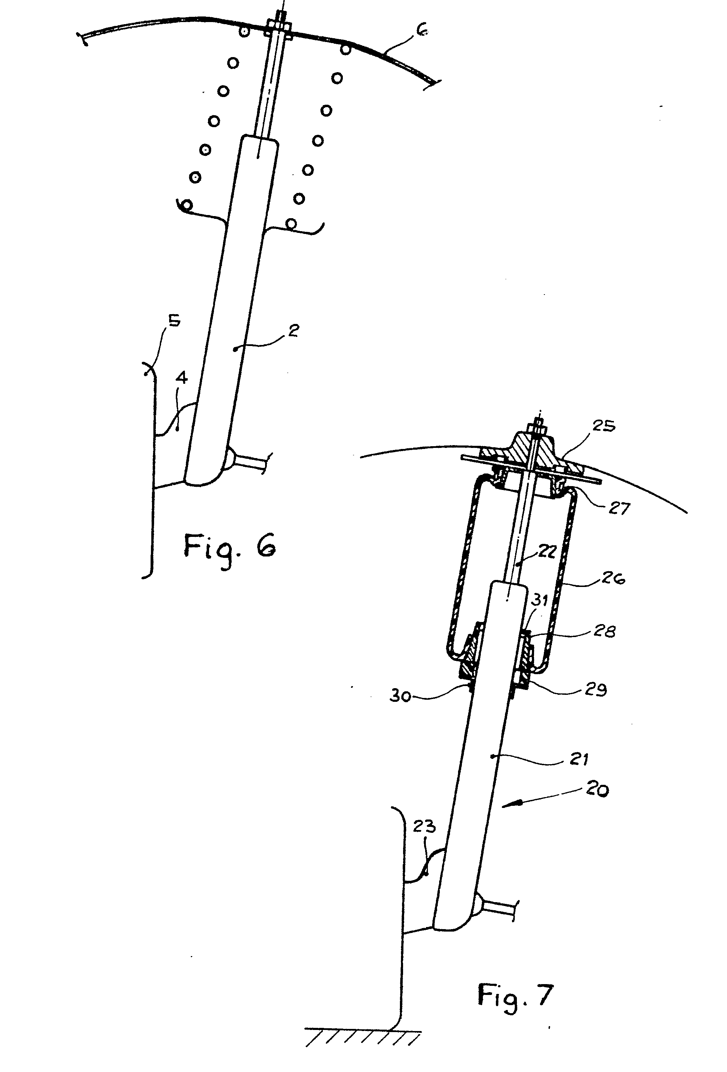

FIG. 6 - shows a design of a solution in the state of the art.

FIG. 7 - shown a variation of the invention.

FIG. 8 - shows a part of FIG. 7.

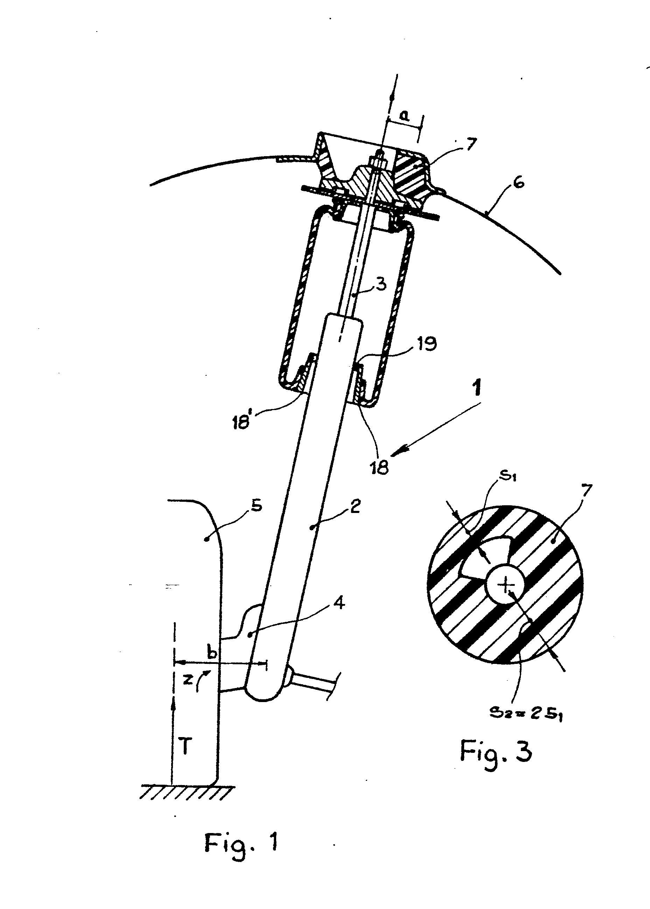

In FIG. 1 - the numeral 1, indicates a shock-absorber - for a vehicle suspension, and, in particular, a suspension for a motor-car.

The shock-abosorber 1 comprises a cylinder-piston unit 2 - with its relative rod 3. The unit 2 is associated, in a known way, to the hub 4 of a wheel 5.

Between the rod 3 and the chassis 6 of the motor-car, there is interposed a special block 7 made of an elastomeric material - for example: natural rubber having a hardness that can be comprised within the range of a minimum value of 45° Shore-A - to a maximum value of 75° Shore-A.

More particularly, as can be seen in FIG.2, at the extremity of the rod 3 and around it, against the ledge 8 of said rod, there are superimposed (from bottom to top), a rigid cylindrical cup-shaped container 9, a rigid lamel 10, a roller-bearing or ball-bearing 11 - that allows for the rotation of the system - during the steering phase of the vehicle, a rigid slab 12 - with a hollow seat apt for receiving the bearing 11.

The slab 12, in one example, is realized with a surface that is first conical 13 and then cylindrical 13'.

The lower surface of the elastomeric-block 7 - is fixed on the surface of the slab 12, through a rubber-to-metal bonding.

The various superimposed elements are locked at the extremity of the rod 3, through the means of a screw-nut 14.

The elastomeric-block is fixed, through a rubber-to-metal bonding, to surfaces that are made solidal with the chassis and the slab 12.

Around the lateral surface of the container 9, there is disposed the upper extremity 15 of an air-spring 16 of the known type - such as that used in some applications relative to the McPherson suspensions.

The air-spring 16 is locked stably, in its furthermost position, to the rigid container, through an indeformable ring 17.

As can be seen in FIG. 2, the elastomeric membrane of the spring 16, comprises the beads 16' in abutment on the lamel 10.

Next, the lower end of the air-spring 16 is fixed to a rigid annular element 18 - made of resin or metal, resting on a rigid bracket 18' fixed around the cylinder.

Between the rigid element 18 and the external part of the cylinder - there is interposed an elastomeric sealing-ring 19 - made, for example, of natural rubber having a Shore-A hardness comprised between 45° and 75°.

The main characteristic of the bonding - between shock-absorber and chassis, consists in the special configuration of the elastomeric-block.

As can be seen in FIG. 2, on the drawing plane, the blocks present an asymmetrical configuration with respect to the axis of the rod.

In practice, the quantity of elastomeric material in the block 7 - on the part opposite the wheel 5, as with respect to the rod axis, is greater than the remaining portion of elastomeric material.

It has been found convenient, for the purpose of the invention, to realize a block 7, that is distributed with a first portion along an arc of a circle subtended - from centre angles between 90° and 270°, with a greater radial thickness than that of the remaining second annular portion of the block itself.

In a particular realization, the block - at mid-height in a transversal cross-section, orthogonal to the rod-axis, can present (FIG. 3) a radial thickness - for example, for an arc of a circle subtended - by a centre angle of 270°, that is double the thickness of the remaining annular portion of the block.

In other solutions, the block (as can be seen in FIG. 2, and in the transversal cross-sections orthogonal to the rod-axis of FIGS. 4 and 5), in the zone having a lesser elastic reaction, gradually varies the radial thickness - from a maximum value at the lower extremity to a minimum value (practically null) at the opposite extremity.

In practice, in all the solutions adopted, there is a tendency to render the reaction of the block to be asymmetrical - i.e. there is a tendency to cause the right-hand portion of FIG. 2 of the block, to react more than the left-hand portion.

With the above-cited realization, a compensating is obtained of the thrusts - transversal the shock-absorber, which would have tended to bend the rod.

These undesirable solutions are determined, as is known, by the reaction $T$ (FIG. 1) due to the ground force transmitted to the wheel - and the consequent mechanical torqure $Z$ - origiated by the result of said force $T$ for the arm $b$, between the wheel and the point where the shock-absorber is bonded to the wheel-hub.

With the present solution, in the presence of the thrust $F$, on the shock-abosrber - applied to the center of the block, it is so had that the same block (FIGS. 2 and 1) react more in the right hand part of FIG. 2 - than on the left-hand part, with determining a torque $F$ x $a$, that contrasts the torque that would have the tendency to bend the rod.

All this is obtained through a simple an opportune calibrating of the lever-arm "a".

The solution of the invention - that was described above solely by way of non-limiting example, relative to a shock-absorber - that comprises an air-spring disposed around a cylinder, can likewise be applied to a shock-absorber - that comprises a helicoidal spring disposed around the cylinder.

In this case, the helicoidal spring results as having its central axis aligned with the axis of the rod.

Therefore, the present solution is clearly distinguished from those of the past - whereby the compensation of the thrusts transversal to the rod, were actuated by inclining the helicoidal spring - with respect to the rod-axis, at angles comprised between 5° and 12°, subtstantially as is shown schematically in FIG. 6.

In FIG. 7, there is shown still another variation of the invention - wherein the compensation of the transversal forces, that would tend to bend the rod, is obtained through a balancing-thrust - that acts directly on the cylinder - i.e. instead of on the rod.

Said solution again comprises a shock-absorber 20 with a cylinder-piston unit 21 - and the relative rod 22.

The cylinder is connected to the wheel-hub 23 and the upper extremity of the rod is, in its turn, connected to the chassis.

Around the rod, there is disposed an air-spring 26 - that is connected, by its upper extremity 27, to parts made solid with the rod, and by its lower extremity - through a rigid element 28 disposed around it, to parts made solid with the cylinder.

The rigid element 28, is fixed to the edges of the lower membrane and has a substantially cylindrical inner surface and a substantially conical outer surface.

The rigid element 28 rests upon an elastomeric-block 29 that, in its turn, is connected - through a rubber-to-metal bonding, to a bracket 30 - which is solidly connected to the outer wall of the cylinder.

Between the lateral surface of the rigid element 28 and the outer wall of the cylinder, there is interposed an elastomeric sealing-ring 31.

The elastomeric-block 29 has an asymmetrical configuration - with the same characteristics of form and of distribution as was already described with reference to the elastomeric-block of FIGS. 1 and 2.

The asymmetry of the elastomeric-block 29 - is chosen in such a way as to create an asymmetrical reaction.

In practice, when the elastomeric-block 29 is loaded, it reacts upon the left-hand portion of the shock-absorber's axis, with a force $\underline{R}$ - that is prevalent with respect to that upon the right-hand side of the same axis (FIG. 8).

The effect of the force $\underline{R}$ is, in practice, that of generating a moment $\underline{W}$ - that would tend to press the portion of the elastomeric sealing-ring 31 at the left-hand side of the cylinder.

The torque $\underline{W}$, as shown in FIG. 8, depends upon the result of $\underline{K}$ x $\underline{c}$ - where: $\underline{c}$ is the lever-arm between the ring 31 and the rigid bracket, and $\underline{K}$ is the force transmitted to the cylinder.

The ring reacts to this torque $\underline{W}$, with a force that originates a moment having an opposing direction, in such a way as to compensate the moment which the ground transmits - through the wheel, to the lower extremity of the shock-absorbing cylinder.

As an alternative to the previously-given solution, a metallic helicoidal spring can be foreseen, in the place of the air-spring, with - in this case, avoiding the inclination of the helicoidal spring for compen- sating the transversal thrusts acting on the shock-absorber.

In particular, the solution of FIG. 7 presents the advantage of acting directly on the cylinder - with hence, avoiding stresses, of any whatseover type, on the rod.

In general, what has also to be emphasized, is how the realizations shown in the figures of the present invention, result as being indispensible - for all those cases requiring the position of the air-spring around the shock-absorber - i.e. those cases where, as stated, for compensating the transversl thrusts, it is not possible to incline the air-springs.

Although some particular forms of particularly advantageous realizations of the invention have been described here, what has also to be kept in mind is that, within the ambit of protection for this patent, there are also included all those alternative variations derived from the above-given inventive principle, which are available to one skilled in the art.

WHAT IS CLAIMED

1.      Shock-absorber (1) in a suspension for vehicles, that comprises - in-between the hub (4) and the chassis (6) of the vehicle, a cylinder-piston unit (2) with its relative rod and a spring coaxial to said unit, the said shock-absorber being characterized by the fact of comprising means (7) for balancing the thrusts acting in the direction transversal to the rod (3).

2.      Shock-absorber, as in CLAIM 1, characterized by the fact that said means comprise an elastomeric-block (7) disposed around the rod (3) in-between the chassis (6) and a slab (12), connected to the free-end of the rod, said block having an asymmetrical configuration with respect to the axis of the rod, with the elastomeric portion of the block, disposed on that part opposite the wheel (5) relatively to the axis of the rod, determining a greater elastic reaction than the remaining portion of the block's elastomeric material.

3.      Shock-absorber, as in CLAIM 2, characterized by the fact that said block-portion having a greater elastic reaction, is distributed on an arc of a circle, subtended by an angle at the center, that is comprised within the minimum and maximum range of values of 90° and 270°.

4.      Shock-absorber, as in CLAIM 3, characterized by the fact that in a transversal plane, orthogonal to the rod-axis, the thickness - of the block-portion having a greater reaction, is substantially double that of the remaining portion of the blocks's elastomeric material.

5.      Shock-absorber, as in CLAIM 2, characterized by the fact of comprising - at the extremity of the rod and around the rod against a ledge of the same - respectively from bottom to top, a cup-shaped container (9), a lamel (10) with a bearing (11), a slab (12) provided on the lower side with a seat corresponding to said bearing, a screw-nut (14) that locks the said slab on the underlying parts, said block - that is asymmetrical with respect to the rod-axis, being connected at the lower extremity of said slab with a rubber-to-metal bonding, and at the upper extremity to parts of the chassis.

6.      Shock-absorber, as in any whatsoever one of the previous Claims from 1 to 5, characterized by the fact of comprising an air-spring that is coaxial with said cylinder of the shock-absorber.

7.      Shock-absorber, as in CLAIM 1, characterized by the fact that the said means for balancing the transversal thrusts on the shock-absorber, act directly on the cylinder.

8.      Shock-absorber, as in CLAIM 7, characterized by the fact of comprising an air-spring (26) around a rod-cylinder unit (21).

9.      Shock-absorber, as in CLAIMS 7 or 8, characterized by the fact that said means that balance the transversal thrusts on the shock-absorber, comprise an elastomeric-block (29) and a ring (31), the said block being disposed between a special bracket (30) - fixed to said cylinder and a rigid element (28) welded to the lower extremity of said spring, said ring being interposed in-between said cylinder and said inner lateral surface of said rigid element, said block having an asymmetrical configuration with respect to the axis of the cylinder, the block-portion nearest to the wheel - with respect to the cylinder's axis, having a greater elastic reaction with respect to the remaining portion of elastomeric material in the block.

10.      Shock-absorber, as in CLAIM 9, characterized by the fact that the portion of said block having a greater elastic reaction, nearest to the wheel, is extended - for an arc of circle subtended by a centre angle, that is comprised between a minium value and a maximum value of 90° and 270° respectively.

Fig. 1

Fig. 3

$s_2 = 2s_1$

2/4

Fig. 2

Fig. 2'

Fig. 5

7

14

7

Fig. 4

7

7

3

13'

Fig. 8

w

22

31

26

29

28

30

21

4/4

Fig. 6

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENTS ABSTRACTS OF JAPAN, vol. 5, no. 123 (M-82)[795], 8th August 1981; & JP - A - 56 63 143 (NISSAN JIDOSHA K.K.) 29-05-1981 | 1-3,5 | B 60 G 15/00<br>F 16 F 1/38<br>F 16 F 9/54 |
| A | IDEM | 10 | |
| X | FR-A-2 374 566 (RENAULT)<br>* Whole document * | 1 | |
| A | DE-A-3 226 886 (AUDI)<br>* Whole document * | 2,3,10 | |
| A | DE-A-2 526 125 (PEUGEOT)<br>* Whole document * | 2,3,10 | **TECHNICAL FIELDS SEARCHED (Int. Cl.4)** |
| A | DE-B-1 116 261 (BOGE)<br>* Column 4, lines 14-20; figures * | 2,3,10 | B 60 G<br>F 16 F |
| A | DE-A-2 021 895 (TOKICO)<br>* Whole document * | 5 | |
| A | DE-A-2 063 448 (FICHTEL & SACHS)<br>* Whole document * | 6,8 | |
| | --- -/- | | |

The present search report has been drawn up for all claims

| Place of search | Date of completion of the search | Examiner |
|---|---|---|
| THE HAGUE | 21-08-1986 | BLURTON M.D |

## DOCUMENTS CONSIDERED TO BE RELEVANT | Page 2

| Category | Citation of document with indication, where appropriate, of relevant passages | Relevant to claim | CLASSIFICATION OF THE APPLICATION (Int. Cl.4) |
|---|---|---|---|
| A | FR-A-2 427 922 (GENERAL MOTORS) <br> * Whole document * <br><br> --- | 9 | |
| A | FR-A-2 268 659 (CPIO) <br><br> --- | | |
| A | DE-A-2 249 174 (FORD) <br><br> ----- | | |

TECHNICAL FIELDS SEARCHED (Int. Cl.4)

The present search report has been drawn up for all claims

| Place of search | Date of completion of the search | Examiner |
|---|---|---|
| THE HAGUE | 21-08-1986 | BLURTON M.D |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82